# EUROPEAN PATENT SPECIFICATION

(11) **EP 1 591 286 B1**
(45) Date of publication and mention of the grant of the patent: **23.01.2008**
(21) Application number: 04101742.7
(22) Date of filing: 26.04.2004
(51) Int. Cl.: B60J 1/20, E06B 9/40, E06B 9/64

(54) **Sunshade assembly and open roof construction for a vehicle provided therewith**
Sonnenschutz und öffnungsfähiges Fahrzeugdach mit einer solchen Vorrichtung
Dispositif de protection solaire et toit ouvrant de véhicule muni de ce dispositif

(43) Date of publication of application: 02.11.2005
(73) Proprietor: Inalfa Roof Systems Group B.V., 5804 AH Venray (NL)
(72) Inventor: Snellenberg, Ronny, Marinus, Jacobus, 5708 DN, Helmond (NL)
(74) Representative: Voncken, Bartholomeus Maria Ch.

(56) References cited:
- EP-A- 1 158 135
- EP-A- 1 393 939
- DE-B- 1 038 371
- US-B2- 6 557 613

## Description

Firstly, the invention relates to a sunshade assembly according to the preamble of claim 1.

In conventional state of the art sunshade assemblies of the type comprising a sun screen, a winding tube for winding and unwinding the sun screen and guide members for guiding two opposite, longitudinally extending edges of the sun screen, the sun screen is wound onto or unwound from the winding tube while being moved relative to the guide members. For example, when the sunshade assembly is wound off from the winding tube a free end of the sun screen is pulled away from the winding tube while this winding tube rotates for giving free an appropriate length of the sun screen. Commonly, such a free end of the sun screen is provided with a pulling beam which can been grabbed manually for moving said free end.

When the sun screen is moved in such a manner (irrespective whether it is in a direction for winding it onto the winding tube or unwinding it therefrom) a substantial amount of friction will occur between the sun screen and the guiding provisions therefore, such as the guide members which will cooperate with the longitudinally extending edges of the sun screen. Such a friction not only hampers a smooth operation of the sun screen, but will also lead to an increased wear of the components of the sunshade assembly. When, in a special case, the sun screen should obtain a curved profile in a transverse cross-section (for example for closely matching a curved element positioned thereabove) additional curved guide parts will be provided for offering such a curved profile to the sun screen. Again, a relative movement between such guide parts and the sun screen will occur, increasing the force needed for operating the sunshade assembly and leading to a further increase of the friction, and thus an increase of wear.

A sunshade assembly according to the preamble of claim 1 is disclosed in US-B-6557613.

In accordance with this state of the art the end of the sun screen remote from the winding tube has a stationary position, that means that as a consequence the entire length of the sun screen unwound from the winding tube also has a stationary position. Thus, no relative movement between such parts of the sun screen and guiding provisions will occur, leading to an improved behaviour of the sun screen, i.e. a substantial reduction of the operation force and nearly a full elimination of friction and consequent wear.

When the winding tube moves, it at the same time winds or unwinds the sun screen in correspondence with its velocity.

It is an object of the present invention to provide an improved sunshade assembly of the type referred to above.

Thus, in accordance with the present invention, a sunshade assembly is provided according to the claim 1.

Thus, the sun screen will be deposited smoothly on the guide members, provided for guiding two opposite, longitudinally extending edges of the sun screen without any relative sliding movement therebetween. The only movement between the sun screen and the guide members will be a movement perpendicularly to the guide members when the sun screen is deposited onto the guide members. Such a movement, however, will not lead to friction or wear.

The guide members not only will define the position of the sun screen in its unwound position, but also will define the track along which the winding tube will move. Thus, the guide members in an effective manner serve two functions.

In accordance with an embodiment, the opposite ends of the winding tube are provided with slide members which slidingly cooperate with the guide members. The relative sliding movement of the slide members in the guide members basically will be the only source of friction in the sunshade assembly, because, as stated above, no friction will occur between the sun screen and the guide members.

Further, it is preferred that the opposite ends of the winding tube and the guide members comprise cooperating locking means for locking the position of the winding tube relative to the guide members. The locking means can maintain a chosen position of the winding tube relative to the guide members, and thus a chosen position of the sun screen between its fully opened and fully closed position (fully wound onto the winding tube and fully unwound therefrom, respectively).

Such locking means may have many different shapes, and preferably are manually operable locking means. Thus, a user of the sunshade assembly may, in a simple manner, determine the position of the sun screen.

In another preferred embodiment of the sunshade assembly according to the present invention, the longitudinally extending edges of the sun screen and the guide members are provided with additional means for maintaining the relative position between said edges and guide members. Such additional means can be provided for preventing a disengagement between the sun screen and the guide members under extreme positions, such as external forces or vibrations acting on the sunshade assembly.

The said additional means may comprise magnetic means; for example, the longitudinally extending edges of the sun screen may comprise flexible magnetic strips, whereas the guide members at least partially are made of a magnetic material. The flexible magnetic strips may be applied continuously along the entire length of the longitudinally extended edges of the sun screen, but also may be provided in an intermittent manner, for example as a large number of successive separate short strips. In its most simple embodiment, the magnetic material of the guide members will be an appropriate metal.

For keeping the sun screen taut, it is preferred that the winding tube is preloaded in a rotational sense for winding the sun screen thereon. For example, the winding tube may comprise a spirally extending spring, as is known per se.

In yet another preferred embodiment of the sunshade assembly according to the present invention, the winding tube is flexible and rotates around a curved axis of rotation, whereas the sun screen comprises in a transverse cross-section a corresponding curved profile.

Such an embodiment makes it possible to match the shape of the sun screen closely to the shape of an adjacent external part, without needing special curved guide parts which would lead to an increased friction.

The invention secondly relates to an open roof construction for a vehicle, comprising a roof opening provided in a stationary roof part of the vehicle, a closure means for opening and closing said roof opening and a sun shade assembly according to the present invention positioned below the roof opening.

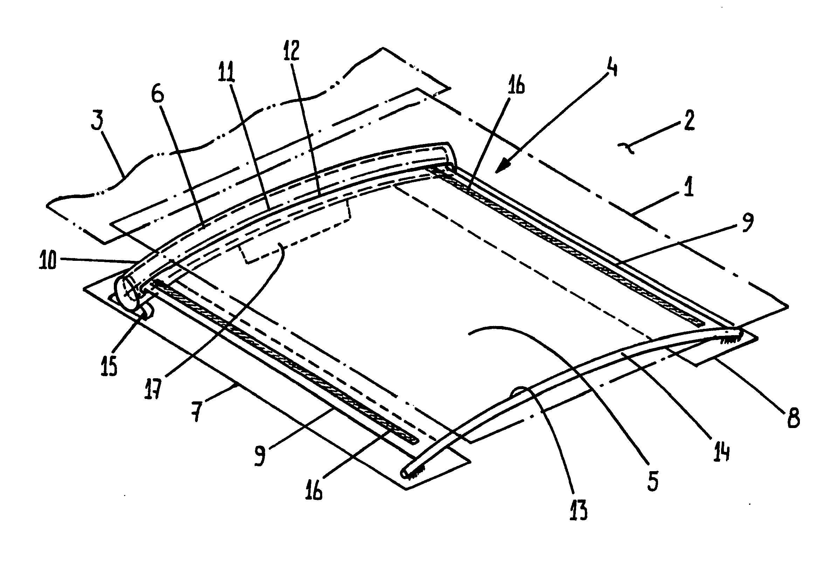

Next, the invention will be elucidated referring to the drawing, in which an examplary embodiment thereof is illustrated.

The only figure shows, schematically, a perspective view of an embodiment of a sunshade assembly as provided in an open roof construction for a vehicle.

Schematically indicated by a chain line 1 is a roof opening provided in a stationary roof section 2 of a vehicle. In a way known per se and not described in detail here, a closure means 3 is provided for opening an closing the roof opening 1.

Below said roof opening 1 a sunshade assembly is provided, which in its entirety is indicated with reference number 4. The major components of the sunshade assembly 4 are a sun screen 5, a winding tube 6 for winding and unwinding the sun screen 5 and guide members 7, 8 for guiding two opposite, longitudinally extending edges 9 of the sun screen 5.

In the illustrated embodiment the winding tube 6 is positioned in a housing 10 which has a curved shape as a result of which the winding tube 6 can rotate around a curved axis 11.

In the housing 10 an elongate opening 12 extends through which the sun screen 5 runs. An end 13 of the sun screen 5 remote from the winding tube 6 is attached to a stationary element 14 which, in the present embodiment, is and elongate member having the same curvature as the housing 10.

The opposite ends of the housing 10 are provided with slide members 15 cooperating with the guide members 7, 8 (or, alternatively, with additional guide members not illustrated).

In an alternative embodiment (not illustrated) the winding tube 6 may be provided without the housing 10, and in such a case the slide members 15 may be attached directly to the ends of the winding tube 6.

Further it is noted, that also other guide provisions may be provided for guiding the ends of the winding tube 6 or housing 10.

Not illustrated in the figure are cooperating locking means provided at the opposite ends of the winding tube 6 (or housing 10) and at the guide members 7, 8 for locking the present position of the winding tube 6 relative to the guide members 7, 8. Such locking means may be operable by hand. For example, the winding tube or housing may be provided with projections cooperating with recesses provided in the guide members. As an alternative, a tilting motion of the housing or winding tube may provide a locking action.

Again referring to the figure, it is shown that the longitudinally extending edges 9 of the sun screen 5 are provided with flexible magnetic strips 16 which will cooperate with the guide members 7, 8 which are at least partially made of a magnetic material (for example a metal).

As is known per se, the winding tube 6 will be preloaded in a rotational sense for winding the sun screen 5 thereon by means of, for example, a torsion spring positioned between the winding tube 6 and housing 10 (not illustrated).

Because the winding tube 6 assumes a curved position (due to the curved shape of the housing 10) it will be flexible for a rotation around the axis 11. Correspondingly, the sun screen 5 also will have a corresponding curved profile in a transverse cross-section after leaving the housing 10 through the opening 12. Principally, no additional guide means are needed for maintaining the sun screen in said curved shape.

In a fully opened position of the sunshade assembly 4 the housing 10 with winding tube 6 is positioned near to the stationary elongate member 14, in which position the sun screen 5 is substantially fully wound onto the winding tube 6 within the housing 10. By moving the housing 10 with enclosed winding tube 6 away from the elongate member 14 (wherein, in the present embodiment, the slide members 15 slide along the guide members 7, 8) the sun screen 5 is progressively wound off the winding tube 6 and deposited onto the guide members 7, 8 with its longitudinal edges 9, thereby progressively closing the roof opening 1. In a desired position of the housing 10 the above-mentioned locking means may be activated, such that the housing 10 with winding tube 6 remains in its present position.

For manipulating the housing 10 with winding tube 6 a grip 17 attached to the housing 10 may be provided. However, it is also conceivable, that the movement of the housing 10 is motor-driven.

When the housing 10 moves away from the elongate member 14 in the described manner, the sun screen 5 is progressively positioned onto the guide members 7, 8 with its longitudinally extending edges 9. In the illustrated embodiment, the magnetic strips 16 then will firmly adhere those edges 9 to the guide members 7, 8, realising a stable positioning of the sun screen 5. When the housing 10 is moved towards the elongate member 14 again, the edges 9 of the sun screen 5 are progressively lifted from the guide members 7, 8.

The invention is not limited to the embodiment described before, which may be varied widely within the scope of the invention as defined by the appending claims.

## Claims

1. Sunshade assembly, comprising a sun screen (5) and a winding tube (6) for winding and unwinding the sun screen, wherein an end (13) of the sun screen remote from the winding tube has a stationary position, whereas the winding tube is movable in the longitudinal direction of the sun screen while winding or unwinding the sun screen, **characterized in that** guide members (7,8) for guiding two opposite, longitudinally extending edges (9) of the sun screen are provided,
wherein the opposite ends of the winding tube (6) cooperate with the guide members (7,8).

2. Sunshade assembly according to claim 1, wherein the opposite ends of the winding tube (6) are provided with slide members (15) which slidingly cooperate with the guide members (7,8).

3. Sunshade assembly according to claim 2, wherein the opposite ends of the winding tube (6) and the guide members (7,8) comprise cooperating locking means for locking the position of the winding tube relative to the guide members.

4. Sunshade according to claim 3, wherein the locking means are manually operable locking means.

5. Sunshade assembly according to any of the previous claims, wherein the longitudinally extending edges (9) of the sun screen (5) and the guide members (7,8) are provided with additional means (16) for maintaining the relative position between said edges and guide members.

6. Sunshade assembly according to claim 5, wherein the said additional means (16) comprise magnetic means.

7. Sunshade assembly according to claim 6, wherein the longitudinally extending edges (9) of the sun screen (5) comprise flexible magnetic strips (16), whereas the guide members (7,8) at least partially are made of a magnetic material.

8. Sunshade assembly according to any of the previous claims, wherein the winding tube (6) is preloaded in a rotational sense for winding the sun screen (5) thereon.

9. Sunshade assembly according to any of the previous claims, wherein the winding tube (6) is flexible and rotates around a curved axis of rotation (11), whereas the sun screen (5) comprises in a transverse cross-section a corresponding curved profile.

10. Open roof construction for a vehicle, comprising a roof opening (1) provided in a stationary roof part (2) of the vehicle, a closure means (3) for opening and closing said roof opening and a sunshade assembly (4) according to any of the previous claims positioned below the roof opening.

## Patentansprüche

1. Sonnenblend-Einrichtung, aufweisend eine Sonnenblende (5) und ein Aufwickelrohr (6) zum Aufwickeln und Abwickeln der Sonnenblende, wobei ein vom Aufwickelrohr abgelegenes Ende (13) der Sonnenblende, eine stationäre Position hat, wobei das Aufwickelrohr der Sonnenblende beim Aufwickeln oder Abwickeln der Sonnenblende in Längsrichtung bewegbar ist, **dadurch gekennzeichnet, dass** Führungselemente (7, 8) zum Führen von zwei gegenüberliegenden, sich längserstreckenden Rändern (9) der Sonnenblende vorgesehen sind, wobei die gegenüberliegenden Enden des Aufwickelrohrs (6) mit den Führungselementen (7, 8) zusammenwirken.

2. Sonnenblend-Einrichtung gemäß Anspruch 1, wobei die gegenüberliegenden Enden der Aufwickelrolle (6) mit Gleitelementen (15) versehen sind, welche mit den Führungselementen (7, 8) verschiebbar zusammenwirken.

3. Sonnenblend-Einrichtung gemäß Anspruch 2, wobei die gegenüberliegenden Enden des Aufwickelrohres (6) und die Führungselemente (7, 8) Zusammenwirk-Verriegelungsmittel zum Verriegeln der Position des Aufwickelrohres bezüglich der Führungselemente aufweisen.

4. Sonnenblende gemäß Anspruch 3, wobei die Verriegelungsmittel manuell betätigbare Verriegelungsmittel sind.

5. Sonnenblend-Einrichtung gemäß einem der vorherigen Ansprüche, wobei die sich längserstreckenden Ränder (9) der Sonnenblende (5) und der Führungselemente (7, 8) mit Zusatzmitteln (16) zum Beibehalten der Relativposition zwischen den Rändern und den Führungselementen versehen sind.

6. Sonnenblend-Einrichtung gemäß Anspruch 5, wobei die Zusatzmittel (16) magnetische Mittel aufweisen.

7. Sonnenblend-Einrichtung gemäß Anspruch 6, wobei die sich längserstreckenden Ränder (9) der Sonnenblende (5) flexible Magnetstreifen (16) aufweisen, wobei die Führungselemente (7, 8) wenigstens teilweise aus einem magnetischen Material ausgebildet sind.

8. Sonnenblend-Einrichtung gemäß einem der vorherigen Ansprüche, wobei das Aufwickelrohr (6) im Drehsinn zum Daraufwickeln der Sonnenblende (5) vorgespannt ist.

9. Sonnenblend-Einrichtung gemäß einem der vorherigen Ansprüche, wobei das Aufwickelrohr (6) flexibel ist und um eine gekrümmte Rotationsachse (11) gedreht wird, wobei die Sonnenblende (5) im Querschnitt ein korrespondierend gekrümmtes Profil aufweist.

10. Offendach-Konstruktion für ein Fahrzeug, aufweisend eine Dachöffnung (1), die in einem stationären Dachteil (2) des Fahrzeugs vorgesehen ist, ein Schließmittel (3) zum Öffnen und zum Schließen der Dachöffnung und eine Sonnenblend-Einrichtung (4) gemäß einem der vorherigen Ansprüche, die unter der Dachöffnung positioniert ist.

## Revendications

1. Ensemble pare-soleil, comprenant un pare-soleil (5) et un tube d'enroulement (6) pour l'enroulement et le déroulement du pare-soleil, dans lequel une extrémité (13) du pare-soleil éloignée du tube d'enroulement présente une position stationnaire, tandis que le tube d'enroulement est déplaçable dans la direction longitudinale du pare-soleil, tout en enroulant et déroulant le pare-soleil, **caractérisé en ce que** des éléments de guidage (7, 8) pour guider deux bords opposés s'étendant longitudinalement du pare-soleil sont prévus, les extrémités opposées du tube d'enroulement (6) coopérant avec les éléments de guidage (7, 8).

2. Ensemble pare-soleil selon la revendication 1, dans lequel les extrémités opposées du tube d'enroulement (6) sont munies d'éléments de guidage (15) qui coopèrent de façon coulissante avec les éléments de guidage (7, 8).

3. Ensemble pare-soleil selon la revendication 2, dans lequel les extrémités opposées du tube d'enroulement (6) et les éléments de guidage (7, 8) comprennent des moyens de blocage coopérant pour bloquer la position du tube d'enroulement par rapport aux éléments de guidage.

4. Pare-soleil selon la revendication 3, dans lequel les moyens de blocage sont des moyens de verrouillage pouvant être actionnés manuellement.

5. Ensemble pare-soleil selon l'une quelconque des revendications précédentes, dans lequel les bords s'étendant longitudinalement (9) du pare-soleil (5) et des éléments de guidage (7, 8) sont équipés de moyens supplémentaires (16) pour maintenir la position relative entre lesdits bords et les éléments de guidage.

6. Ensemble pare-soleil selon la revendication 5, dans lequel lesdits moyens supplémentaires (16) comprennent des moyens magnétiques.

7. Ensemble pare-soleil selon la revendication 6, dans lequel les bords s'étendant longitudinalement (9) du pare-soleil (5) comprennent des bandes magnétiques souples (16), tandis que les éléments de guidage (7, 8) sont au moins partiellement en un matériau magnétique.

8. Ensemble pare-soleil selon l'une quelconque des revendications précédentes, dans lequel le tube d'enroulement (6) est précontraint dans un sens de rotation pour l'enroulement du pare-soleil (5) sur celui-ci.

9. Ensemble pare-soleil selon l'une quelconque des revendications précédentes, dans lequel le tube d'enroulement (6) est souple et est en rotation autour d'un axe courbe de rotation (11), tandis que le pare-soleil (5) comprend, dans une section transversale, un profil courbe correspondant.

10. Structure de toit ouvrant pour un véhicule, comprenant une ouverture de toit (1) munie d'une partie de toit stationnaire (2) du véhicule, des moyens de fermeture (3) pour l'ouverture et la fermeture de ladite ouverture de toit et un ensemble pare-soleil (4) selon l'une quelconque des revendications précédentes, positionné au-dessous de l'ouverture du toit.
